# EUROPÄISCHE PATENTSCHRIFT

(11) **EP 1 090 790 B1**
(45) Veröffentlichungstag und Bekanntmachung des Hinweises auf die Patenterteilung: **26.03.2008**
(21) Anmeldenummer: 00118941.4
(22) Anmeldetag: 01.09.2000
(51) Int. Cl.: B60J 7/20, B60J 7/02

(54) **Cabriofahrzeug mit einem im Kofferraum verstaubaren Hardtop**
Convertible vehicle provided with a hardtop storable in the luggage compartment
Véhicule cabriolet équipé avec un toit rigide escamotable dans le porte-bagages

(30) Priorität: 09.10.1999 DE 19948746
(43) Veröffentlichungstag der Anmeldung: 11.04.2001
(73) Patentinhaber: AUDI AG, 85045 Ingolstadt (DE)
(72) Erfinder: Enning, Norbert, 85095 Denkendorf (DE)
(74) Vertreter: Engelhardt, Harald

(56) Entgegenhaltungen:
- EP-A- 0 764 553
- US-A- 2 768 025
- US-A- 3 021 174
- US-A- 3 180 677

## Beschreibung

Die Erfindung betrifft ein Cabriofahrzeug mit einem im Kofferraum verstaubaren Hardtop nach dem Oberbegriff des Anspruchs 1.

Bei einem gattungsgemäßen bekannten Cabriofahrzeug mit einem im Kofferraum verstaubaren Hardtop (US 3 021 174) besteht dieses aus einem vorderen Dachteil und aus einem an den Kofferraum anschließenden hinteren Dachteil. Das vordere Dachteil ist entlang erster seitlicher, mit dem hinteren Dachteil verbundener Führungen unter das hintere Dachteil zu einem Dachteilpaket einschiebbar. Anschließend ist das hintere Dachteil mit dem darunter eingeschobenen vorderen Dachteil als Dachteilpaket entlang zweiter seitlicher, im Kofferraum angebrachter Führungen in diesen bei geöffneter Heckklappe verlagerbar.

Durch die Teilung des Hardtops in ein vorderes und ein hinteres Dachteil und die Verstauung im zusammengeschobenen Zustand wird vorteilhaft erreicht, dass ein relativ großes Hardtop, beispielsweise für ein viersitziges Cabriofahrzeug, in einem relativ kleinen Kofferraum verstaubar ist. Die dazu hier verwendete Anordnung und Mechanik ist jedoch aufwendig und kompliziert, wobei zudem der Kofferraum bei verstautem Hardtop nurmehr sehr eingeschränkt benutzbar ist.

Dazu übergreift das hintere Dachteil im Grundzustand das vordere Dachteil mit einer bei modernen Fahrzeugen nicht akzeptierbaren Stufe und das vordere Dachteil wird geradlinig in das hintere Dachteil eingeschoben. Die Heckscheibe ist in der Grundstellung des hinteren Dachteils hinter die Rückbanklehne absenkbar, so dass eine Öffnung im hinteren Dachteil gebildet wird. Das hintere Dachteil ist dann mit eingeschobenem vorderen Dachteil entlang von Führungsschienen geradlinig nach hinten verschiebbar und dann in den Kofferraum absenkbar. Der Kofferraum ist dabei nur noch durch den offenen Heckfensterausschnitt zugänglich. Insbesondere erfordert die absenkbare Heckscheibe eine aufwendige Mechanik mit Justier- und Dichtproblemen. Durch die konkrete Verschiebebewegung ist für den Verstauvorgang eine große Öffnung im Kofferraum zu schaffen, die durch eine zusätzlich zur normalen Aufklapprichtung auch nach hinten aufklappbare Heckklappe zur Verfügung gestellt wird. Dies erfordert aufwendige, zusätzliche, verriegelbare Schwenklageranordnungen für die Heckklappe. Die Gesamtanordnung und die vorgeschlagene Schienenführung erfordern zudem einen unzeitgemäßen und strömungstechnisch ungünstigen eckigen Karosserieaufbau.

Weiter ist ein Cabriofahrzeug mit einem im Kofferraum verstaubaren Hardtop bekannt (US 2,768,025), bei dem das Hardtop einteilig ausgebildet und in einen relativ großen Kofferraum versenkbar ist. Auch hier ist in aufwendiger Weise vor dem Verstauvorgang die Heckscheibe aus dem Dachteil wegklappbar, um durch die geschaffene Öffnung eine jedoch sehr eingeschränkte Zugänglichkeit für den Kofferraum bei verstautem Dachteil zu erhalten. Das Dachteil wird hier entlang von gegenüberliegenden, parallelen und im Kofferraum angebrachten, S-förmigen Führungsschienen nach hinten verlagert. Die S-Führungsschienen weisen einen vorderen, relativ langen, linearen, waagrechten Bereich auf und führen anschließend in einem S-Bogen bis zum Kofferraumboden nach hinten unten. Am Dachteil sind an dessen hinteren, seitlich unteren Bereichen jeweils zwei beabstandete Führungsteile angebracht, die an der jeweils zugeordneten S-Führungsschiene eingreifen und damit eine Zwangsführung des Dachteils entsprechend der S-Kontur der S-Führungsschienen bedingen. Durch die Führung an den S-Führungsschienen mit einem langen, linearen, waagrechten, vorderen Bereichen und einer relativ späten Absenkung des Dachteils ist eine große Öffnung zum Kofferraum erforderlich, die auch hier in aufwendiger Weise durch eine zusätzlich zur normalen Aufklapprichtung nach hinten öffenbare Heckklappe geschaffen wird. Zudem ist die Anordnung insbesondere bei einem viersitzigem Cabriofahrzeug nur mit einem bei modernen Fahrzeugen nicht zur Verfügung stehenden übergroßen Kofferraum möglich, der zudem bei verstautem Dachteil nur sehr eingeschränkt durch die Heckfensteröffnung benutzbar ist. Auch hier ist eine aufwendige Mechanik mit Justier- und Dichtproblemen in Verbindung mit der entfernbaren Heckscheibe erforderlich.

Aufgabe der Erfindung ist es, ein gattungsgemäßes Cabriofahrzeug mit einem im Kofferraum verstaubaren Hardtop so weiterzubilden, dass mit einem einfachen, funktionsfähigen Aufbau eine günstige Verstauposition des Hardtops erreichbar ist.

Diese Aufgabe wird mit den Merkmalen des Anspruchs 1 gelöst.

Gemäß Anspruch 1 bestehen die zweiten, jeweils seitlich im Kofferraum angebrachten Führungen aus gegenüberliegenden, parallelen S-Führungsschienen. Mit dem hinteren Dachteil sind an dessen hinteren, seitlich unteren Bereichen jeweils zwei beabstandete Führungsteile verbunden, die jeweils an der zugeordneten Führungsschiene geführt sind. Die S-Führungsschienen sind so angebracht, dass das Dachteilpaket in einem Kofferraumbereich unmittelbar unterhalb der geschlossenen Heckklappe verstaubar ist, so dass ein darunterliegender Kofferraumbereich zwischen Kofferraumboden und verstautem Dachteilpaket nutzbar ist.

Bei einer solchen Anordnung kann im verstauten Zustand des Hardtops ein wesentlicher Teil des Kofferraum weiter benutzt werden, ohne dass das Heckfenster in aufwendiger Weise aus dem hinteren Dachteil entfernt werden müsste. Bei geeigneter Verstauposition ist zudem die Zugänglichkeit des Kofferraums gegenüber der gattungsgemäßen Lösung verbessert.

Eine solche Verstauposition ist mit der konkreten Ausbildung der S-Führungsschienen nach Anspruch 2 erreichbar, wobei diese jeweils mit einem flachen, nach hinten unten weisenden ersten S-Bogen am oberen, frontseitigen Kofferraumbereich beginnen, so dass bei einer bereits kurzen, anfänglichen Rückbewegung des zweiten Dachteils dieses durch die Zwangsführung mittels der jeweils beabstandeten Führungsteile im vorderen Dachteilbereich nach oben ankippt. Dadurch entsteht zwischen dem noch in seiner Grundstellung verbliebenen vorderen Dachteil und dem angekippten, hinteren Dachteil ein Spalt, durch den das vordere Dachteil unter das hintere Dachteil einschiebbar ist.

Im weiteren Verlauf weisen die S-Führungsschienen nach hinten jeweils einen etwa geraden, nach hinten unten gerichteten, bis etwa auf halbe Kofferraumhöhe geführten Geradführbereich auf. Damit wird das ineinandergeschobene Dachteilpaket schon zu Beginn des Verstauvorgangs schräg nach hinten unten in den Kofferraum bewegt, wodurch eine Einschiebeöffnung in den Kofferraum relativ klein gehalten werden kann. Besonders vorteilhaft kann eine solche Einschiebeöffnung in ausreichender Größe mit einer etwas modifizierten, in üblicher Weise nach vorne hochklappbaren Heckklappe entsprechend Anspruch 4 realisiert werden, wodurch aufwendige, zusätzliche Schwenklager für eine zusätzliche, entgegengesetzte Heckklappenöffnung entfallen können.

Im hinteren Endbereich weisen die S-Führungsschienen zudem einen zweiten, nach hinten oben auslaufenden S-Bogen auf dergestalt, dass das Dachteilpaket mittels der angegebenen Zwangsführung im vorderen Bereich nach unten abkippbar und insgesamt in eine etwa waagrechte Verstauposition kippbar ist.

Damit wird insbesondere bei flach bogenförmigen Dachteilen, wie sie sich bei strömungsgünstigen modernen Personenwagen ergeben, eine sehr kompakte Verstauanordnung erreicht, bei der ein wesentlicher Teil des Kofferraums bei guter Zugänglichkeit für eine Benutzung freigehalten wird.

Für eine stabile und kostengünstige Ausbildung der Führung können nach Anspruch 3 als Führungsschienen U-Profile und als dachteilseitige Führungsteile Führungsrollen verwendet werden.

Nach Anspruch 4 umgreift die Heckklappe den hinteren Bereich des hinteren Dachteils seitlich mit nach vorne weisenden Heckklappenseitenteilen, wobei im vorderen Endbereich der Heckklappenseitenteile jeweils Heckklappen-Schwenklager für das Aufschwenken der Heckklappe in die übliche Aufschwenkposition angeordnet sind. Dadurch ist bei geöffneter Heckklappe zwischen den Heckklappenseitenteilen ein ausreichend großer Durchführbereich zum Durchtritt des verstaubaren Dachteilpakets geschaffen.

Eine vorteilhafte, konkrete Ausbildung der ersten seitlichen Führungen für das Einschieben des vorderen Dachteils in das hintere Dachteil wird mit den Merkmalen des Anspruchs 5 angegeben. Dazu sind die ersten seitlichen Führungen parallele Schiebeführungen aus einem heckseitigen Führungsschienenteil und einem frontseitigen, zugeordneten Schiebeteil. Die heckseitigen Führungsschienenteile sind endseitig um eine Querachse am hinteren Bereich des hinteren Dachteils an Führungsschienen-Schwenklagern schwenkbar gelagert und nach unten durch wenigstens einen Anschlag abstützbar. Die Führungsschienenteile erstrecken sich dabei unter dem hinteren Dachteil etwa über die hintere Dachteillänge. Die frontseitigen Schiebeteile sind mit dem vorderen Dachteil verbunden.

Zu Beginn eines Verstauvorgangs ist das hintere Dachteil anhebbar, insbesondere in der vorstehend erläuterten Weise ankippbar. Dabei verbleiben die heckseitigen Führungsschienenteile noch im wesentlichen in ihrer Ausgangslage, da sie relativ zum hinteren Dachteil an den weit hinten liegenden Führungsschienenschwenklagern schwenkbar gelagert und etwa in der Ausgangslage nach unten durch Anschläge abgestützt sind. Durch das angehobene hintere Dachteil entsteht somit der Spalt, durch den das vordere Dachteil unter das hintere Dachteil entlang der Schiebeführungen einschiebbar ist.

Bei der vorstehend beschriebenen Ausbildung der S-Führungsschienen ergibt sich nur durch Rückverlagerung des hinteren Dachteils dieser Spalt, so dass zusätzliche Einrichtungen für eine relative Höhenverstellung des vorderen und hinteren Dachteils entfallen können und im geschlossenen Dachzustand eine vorteilhaft durchgehende Außenfläche einfach erzielbar ist.

In einer stabilen, konkreten Ausführungsform der Schiebeführungen nach Anspruch 6, werden diese als Teleskopschienenführungen vorzugsweise rollengelagert ausgebildet, wobei für eine günstige Geometrie nach Anspruch 7 eine kreisbogenabschnittförmige Biegung vorgeschlagen wird.

Für ein dichtes Hardtop-Dach in der Geschlossenstellung sollen nach Anspruch 8 in üblicher Weise an allen Anlageflächen des vorderen Dachteils und des hinteren Dachteils und/oder an angrenzenden Anlageteilen Dichtprofile angeordnet sein.

Für die Verschiebungen der Dachteile können in an sich bekannter Weise nach Anspruch 9 platzsparende und gut funktionsfähige Spiralkabel-Antriebe verwendet werden.

Da die einzelnen Verschiebevorgänge beim Öffnen oder Schließen des Fahrzeugdachs zeitlich koordiniert in einer bestimmten Reihenfolge durchzuführen sind, wird mit Anspruch 10 für eine bequeme und fehlerfreie Betätigung eine Steuereinrichtung in Verbindung mit wenigstens einem Antriebsmotor vorgeschlagen.

Dabei wird zum Öffnen des Hardtops in einem ersten Steuerschritt die Heckklappe geöffnet. In einem zweiten Steuerschritt wird das hintere Dachteil etwas nach hinten bewegt und angehoben bzw. vorne etwas hochgekippt. In einem dritten Steuerschritt wird das vordere Dachteil unter das hintere Dachteil zur Bildung des Dachteilpakets verlagert. In einem vierten Steuerschritt wird das Dachteilpaket in seine Verstauposition verlagert und in einem fünften Steuerschritt wird die Heckklappe geschlossen. Zum Schließen des Hardtops wird der Vorgang in umgekehrter Reihenfolge durchgeführt.

Anhand einer Zeichnung wird die Erfindung näher erläutert.

Es zeigen:
- Fig. 1: eine schematische Draufsicht auf ein Cabriofahrzeug mit einem geschlossenen Hardtop,
- Fig. 2: eine schematische, perspektivische Rückansicht eines Cabriofahrzeugs zu Beginn des Verstauvorgangs des Hardtops,
- Fig. 3: eine schematische, perspektivische Detaildarstellung eines vorderen Dachteils und eines sich daran anschließenden hinteren Dachteils zu Beginn des Verstauvorgangs,

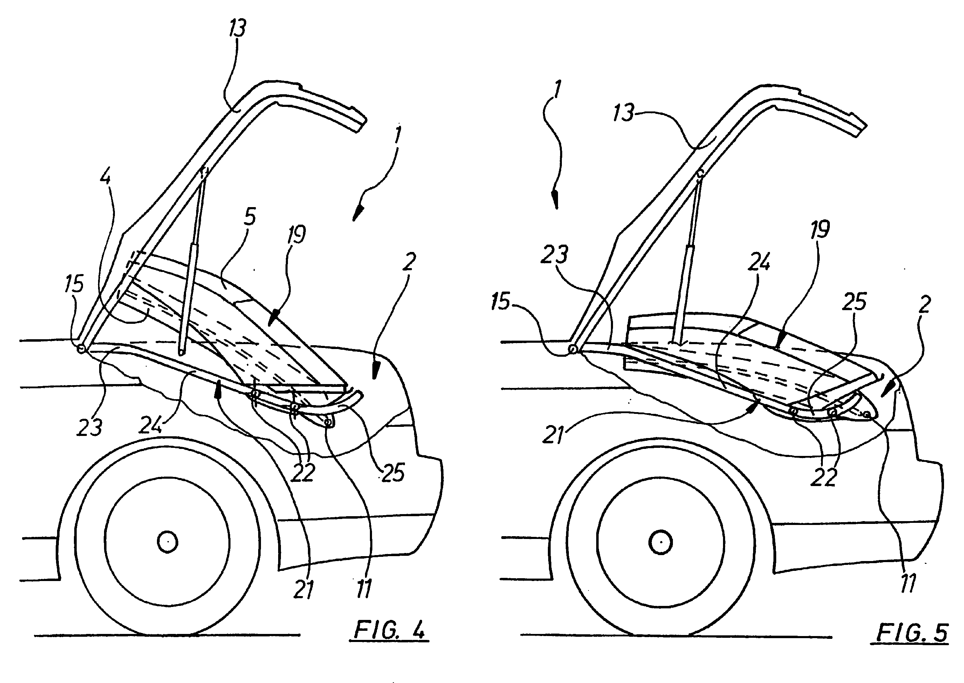

- Fig. 4: eine schematische, vergrößerte Seitenansicht eines Fahrzeughecks eines Cabriofahrzeugs mit in einem Geradführbereich von S-Führungsschienen geführten Dachteilpaket,
- Fig. 5: eine schematische Seitenansicht entsprechend Fig. 4 mit weiter nach unten abgesenkten Dachteilpaket,

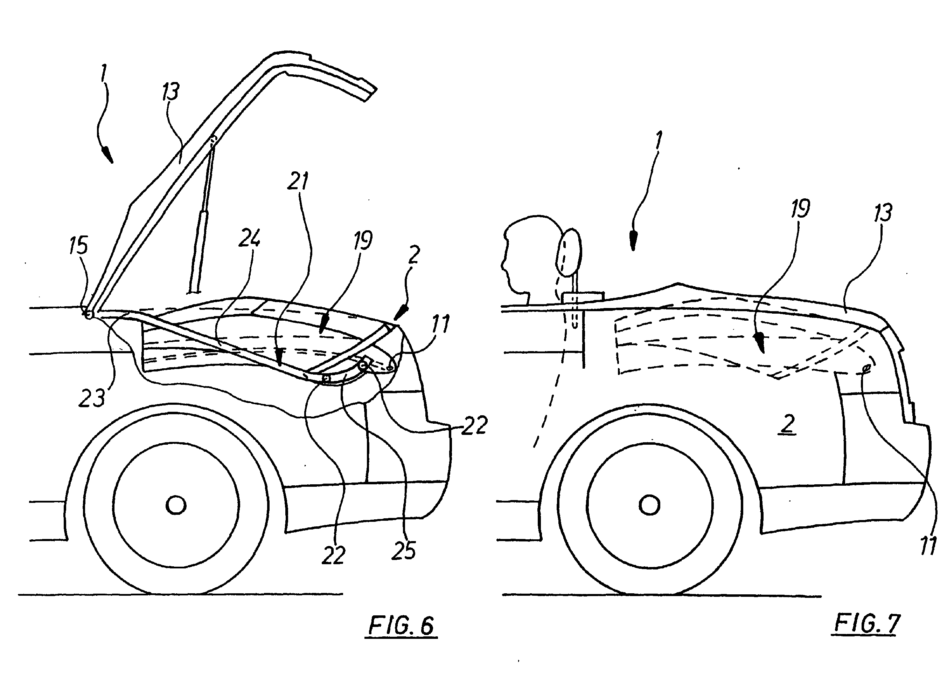

- Fig. 6: eine schematische Seitenansicht entsprechend den Fig. 4 und 5 mit vollständig abgesenktem Dachteilpaket, und
- Fig. 7: eine schematische Seitenansicht entsprechend den Fig. 4 bis 6 bei vollständig verstautem Dachteilpaket und geschlossener Heckklappe.

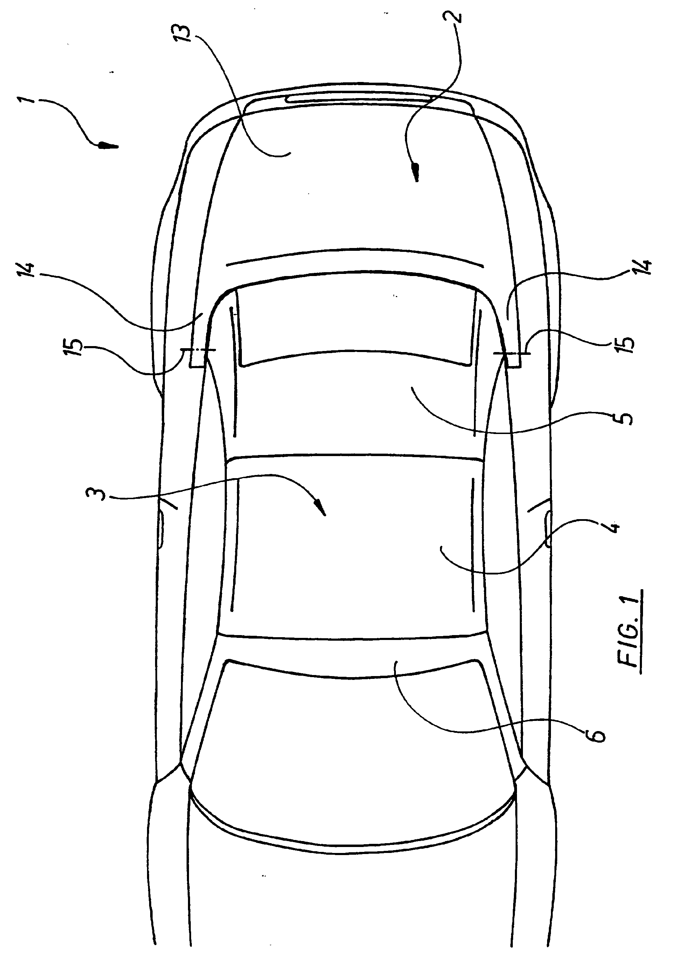

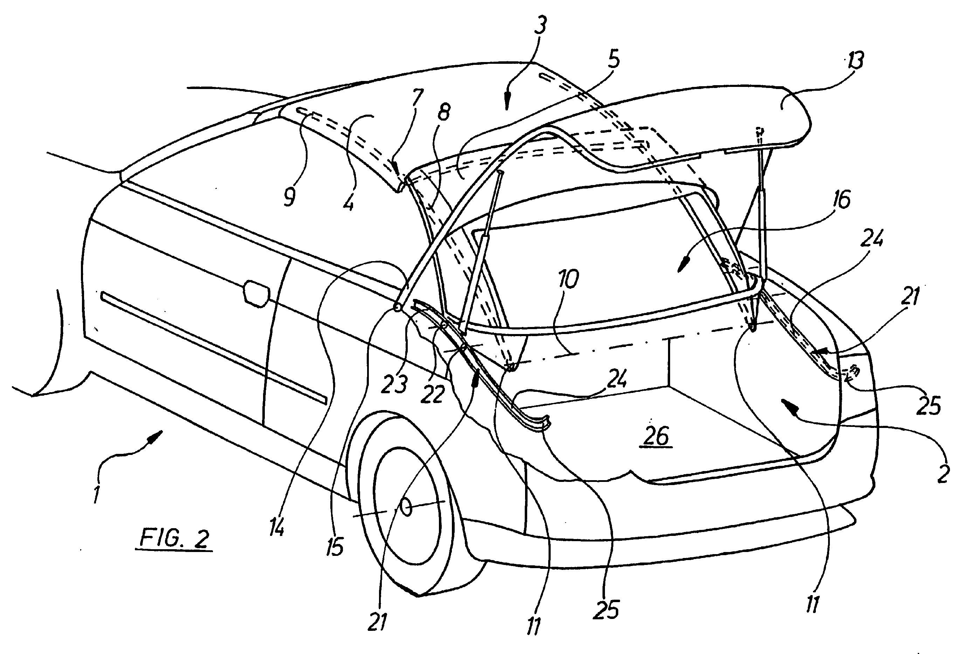

In der Fig. 1 ist schematisch eine Draufsicht auf ein Cabriofahrzeug 1 mit einem im Kofferraum 2 verstaubaren Hardtop 3 dargestellt. Wie dies insbesondere auch aus der Fig. 2 ersichtlich ist, die eine schematische und perspektivische Rückansicht des Cabriofahrzeugs 1 zeigt, besteht das Hardtop 3 aus einem vorderen Dachteil 4 und aus einem an den Kofferraum 2 anschließenden, hinteren Dachteil 5.

In der Fig. 1 ist das Hardtop 3 im geschlossenen Zustand dargestellt, bei dem das vordere Dachteil 4 im Bereich eines oberen Fensterrahmenquerträgers 6 dicht anliegt. In diesem geschlossenen Zustand liegt ferner das hintere Dachteil 5 dicht am vorderen Dachteil 4 an.

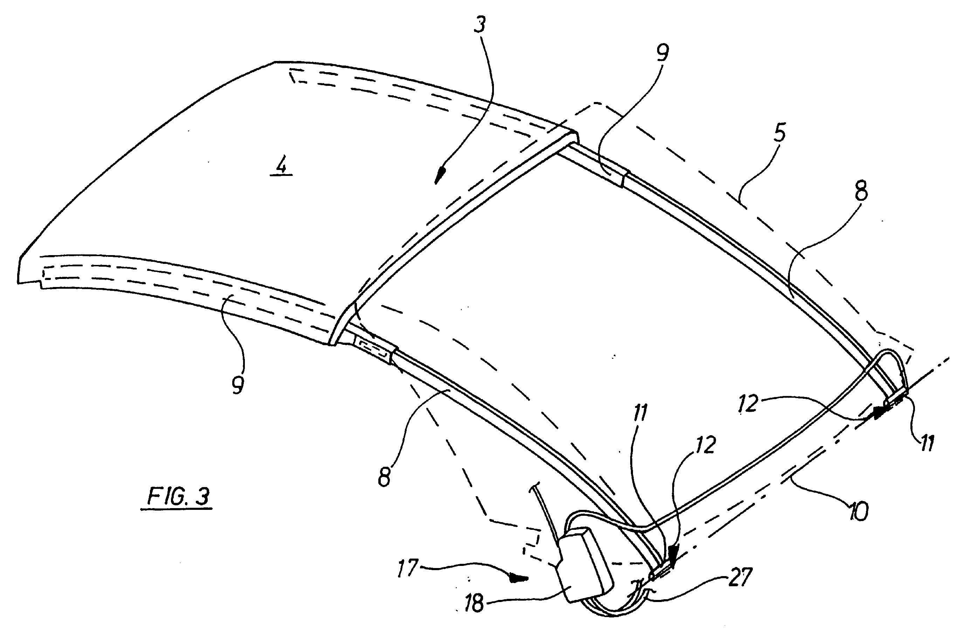

Zum Öffnen des Hardtops 3 wird das vordere Dachteil 4 entlang erster, seitlicher, mit dem hinteren Dachteil 5 verbundener Führungen, die als parallele Schiebeführungen 7 ausgebildet sind, unter das hintere Dachteil 5 eingeschoben, wie dies insbesondere auch aus den Fig. 2 und 3 ersichtlich ist. Die Schiebeführungen 7 sind durch jeweils ein heckseitiges Führungsschienenteil 8 und ein frontseitiges, dem Führungsschienenteil 8 zugeordnetes Schiebeteil 9 gebildet.

Die heckseitigen Führungsschienenteile 8 sind endseitig um eine Querachse 10 am hinteren Bereich des hinteren Dachteils 5 an Führungsschienen.

## Patentansprüche

1. Cabriofahrzeug mit einem im Kofferraum verstaubaren Hardtop,
wobei das Hardtop aus wenigstens einem vorderen Dachteil und aus einem an den Kofferraum anschließenden, hinteren Dachteil besteht,
das vordere Dachteil entlang erster, seitlicher, mit dem hinteren Dachteil verbundener Führungen unter das hintere Dachteil zu einem Dachteilpaket einschiebbar ist,
das hintere Dachteil mit dem darunter eingeschobenen, vorderen Dachteil als Dachteilpaket entlang zweiter, seitlicher, im Kofferraum angebrachter Führungen in diesen bei geöffneter Heckklappe verlagerbar ist,
**dadurch gekennzeichnet,**
**dass** die zweiten, jeweils seitlich im Kofferraum (2) angebrachten Führungen aus gegenüberliegenden, parallelen S-Führungsschienen (21) bestehen,
**dass** mit dem hinteren Dachteil (5) an dessen hinteren, seitlich unteren Bereichen jeweils zwei beabstandete Führungsteile (22) verbunden sind, die jeweils an der zugeordneten S-Führungsschiene (21) geführt sind, und
**dass** die S-Führungsschienen (21) so angebracht sind, dass das Dachteilpaket (19) in einem Kofferraumbereich unmittelbar unterhalb der geschlossenen Heckklappe (13) verstaubar ist, so dass ein darunterliegender Kofferraumbereich zwischen Kofferraumboden (26) und verstautem Dachteilpaket (19) nutzbar ist.

2. Cabriofahrzeug nach Anspruch 1, **dadurch gekennzeichnet,**
**dass** die S-Führungsschienen (21) jeweils mit einem flachen, nach hinten unten weisenden ersten S-Bogen (23) am oberen, frontseitigen Kofferraumbereich beginnen, so dass bei einer kurzen Rückbewegung des hinteren Dachteils (5) dieses mittels der Zwangsführung über die jeweils beabstandeten Führungsteile (22) im vorderen Dachteilbereich (4) nach oben ankippt,
**dass** die S-Führungsschienen (21) im weiteren Verlauf nach hinten jeweils einen etwa geraden, nach hinten unten gerichteten, bis etwa auf halbe Kofferraumhöhe geführten Geradführbereich (24) aufweisen, und
**dass** die S-Führungsschienen (21) im hinteren Endbereich jeweils einen zweiten dergestalt nach hinten oben auslaufenden S-Bogen (25) aufweisen, dass das Dachteilpaket (19) im vorderen Bereich nach unten abkippbar und insgesamt in eine etwa waagrechte Verstauposition (20) kippbar ist.

3. Cabriofahrzeug nach Anspruch 1 oder Anspruch 2, **dadurch gekennzeichnet, dass** die S-Führungsschienen (21) als U-Profile und die dachteilseitigen Führungsteile (22) als darin eingreifende Führungsrollen ausgebildet sind.

4. Cabriofahrzeug nach einem der Ansprüche 1 bis 3, **dadurch gekennzeichnet,**
**dass** die Heckklappe (13) den hinteren Bereich des hinteren Dachteils (5) seitlich mit nach vorne weisenden Heckklappenseitenteilen (14) umgreift, und
**dass** im vorderen Endbereich der Heckklappenseitenteile (14) jeweils Heckklappen-Schwenklager (15) für das Aufschwenken der Heckklappe (13) angeordnet sind, so dass bei geöffneter Heckklappe (13) zwischen den Heckklappenseitenteilen (14) ein großer Durchführbereich (16) zum Durchtritt des verstaubaren Dachteilpakets (19) gegeben ist.

5. Cabriofahrzeug nach einem der Ansprüche 1 bis 4, **dadurch gekennzeichnet,**
**dass** die ersten seitlichen Führungen parallele Schiebeführungen (7) jeweils aus einem heckseitigen Führungsschienenteil (8) und einem frontseitigen, zugeordneten Schiebeteil (9) sind,
**dass** die heckseitigen Führungsschienenteile (8) endseitig um eine Querachse (10) am hinteren Bereich des hinteren Dachteils (5) an Führungsschienenschwenklagern (11) schwenkbar gelagert und nach unten durch wenigstens einen Anschlag (12) abstützbar sind, wobei sich die Führungsschienenteile (8) unter dem hinteren Dachteil (5) etwa über die hintere Dachteillänge erstrecken,
**dass** die frontseitigen Schiebeteile (9) mit dem vorderen Dachteil (4) verbunden sind, und
**dass** das hintere Dachteil (5) im vorderen Bereich zu Beginn eines Verstauvorgangs anhebbar ist, wobei die heckseitigen Führungsschienenteile (8) relativ zum hinteren Dachteil (5) verschwenkbar und etwa entsprechend ihrer Ausgangslage nach unten abstützbar sind, so dass durch den dabei zwischen dem hinteren Dachteil (5) und vorderen Dachteil (4) entstehenden Spalt das vordere Dachteil (4) entlang der Schiebeführungen (7) unter das hintere Dachteil (5) verlagerbar ist.

6. Cabriofahrzeug nach Anspruch 5, **dadurch gekennzeichnet, dass** die Schiebeführungen (7) als Teleskopschienenführungen, vorzugsweise rollengelagerte Teleskopschienenführungen, ausgebildet sind und jeweils das heckseitige Führungsschienenteil (8) ein heckseitiges Teleskopschienenteil und das frontseitige Schiebeteil (9) ein zugeordnetes, frontseitiges Teleskopschienenteil ist.

7. Cabriofahrzeug nach Anspruch 6, **dadurch gekennzeichnet, dass** die Teleskopschienenteile (8) in einer Seitenansicht kreisbogenabschnittförmig gebogen sind.

8. Cabriofahrzeug nach einem der Ansprüche 1 bis 7, **dadurch gekennzeichnet, dass** an allen Anlageflächen des vorderen Dachteils (4) und des hinteren Dachteils (5) und/oder an angrenzenden Anlageteilen Dichtprofile angeordnet sind.

9. Cabriofahrzeug nach einem der Ansprüche 1 bis 8, **dadurch gekennzeichnet, dass** für die Verlagerung des vorderen Dachteils (4) unter das hintere Dachteil (5) und/oder die Verlagerung des Dachteilpakets (19) in die Verstauposition (20) ein Spiralkabel-Antrieb verwendet ist.

10. Cabriofahrzeug nach einem der Ansprüche 1 bis 9, **dadurch gekennzeichnet, dass** zur automatischen Betätigung der Anordnung eine Steuereinrichtung (17) und wenigstens ein Antriebsmotor (18) verwendet sind, wobei zum Öffnen des Hardtops (3) in einem ersten Steuerschritt die Heckklappe (13) geöffnet wird, in einem zweiten Steuerschritt das hintere Dachteil (5) etwas nach hinten bewegt und **dadurch** vorne etwas hochgekippt wird, in einem dritten Steuerschritt das vordere Dachteil (4) unter das hintere Dachteil (5) unter Bildung des Dachteilpakets (19) verlagert wird, in einem vierten Steuerschritt das Dachteilpaket (19) in seine Verstauposition (20) verlagert wird und in einem fünften Steuerschritt die Heckklappe (13) geschlossen wird, und wobei zum Schließen des Hardtops (3) der Vorgang mit gegenläufigen Steuerschritten durchführbar ist.

## Claims

1. Convertible vehicle provided with a hardtop stowable in the luggage compartment, wherein the hardtop comprises at least one front roof part and one rear roof part which adjoins the luggage compartment, the front roof part can be pushed in under the rear roof part along first lateral guideways connected to the rear roof part, to form one roof part package, wherein with the rear flap open, the rear roof part with the front roof part pushed in thereunder can be displaced into the luggage compartment as a roof part package, along second lateral guideways mounted in the luggage compartment, **characterised in that** the second guideways which are each mounted laterally in the luggage compartment (2) comprise mutually opposed, parallel S-shaped guide rails (21), that connected to the rear roof part (5) at its rear, laterally lower regions are two guide members (22), spaced apart from one another, and each guided on the associated S-shaped guide rail (21), and that the S-shaped guide rails (21) are mounted such that the roof part package (19) can be stowed in a luggage compartment region immediately under the closed rear flap (13), so that a luggage compartment region lying thereunder between the luggage compartment floor (26) and the stowed roof part package (19) is usable.

2. Convertible vehicle according to claim 1, **characterised in that** the S-shaped guide rails (21) each begin at the upper forward luggage compartment region with a flat first S-bend (23) directed rearwardly and downwardly, such that given a short displacing motion of the rear roof part (5), said rear roof part (5) tilts upwardly in the region of the front roof part (4) due to the forced guidance of the respectively spaced guide members (22), that in their further rearward course, the S-shaped guide rails (21) each have an approximately straight rearwardly downwardly directed straight guiding region (24) running to approximately half the luggage compartment height, and that in their rear end region, the S-shaped guide rails (21) each have a second similar rearwardly upwardly ending S-bend (25), that in the front region, the roof part package (19) is tiltable downwardly and is tiltable overall into an approximately horizontal stowing position (20).

3. Convertible vehicle according to claim 1 or claim 2, **characterised in that** the S-shaped guide rails (21) are constructed as U-profiles and the guide members (22) towards the roof part are constructed as guide rollers engaging therein.

4. Convertible vehicle according to one of the claims 1 to 3, **characterised in that** the rear flap (13) laterally encompasses the rear region of the rear roof part (5) with forwardly facing rear flap side members (14), and that rear flap tilt bearings (15) are arranged in the front end region of the rear flap side members (14) for tilting up the rear flap (13), so that with the rear flap (13) open, a large passage region (16) is provided between the rear flap side members (14) for the passage of the stowable roof part package (19).

5. Convertible vehicle according to one of the claims 1 to 4, **characterised in that** the first lateral guideways are parallel sliding guideways (7), each comprising a rearward guide rail member (8) and a forward, associated slide member (9), that the rearward guide rail members (8) are mounted pivotable on guide rail pivot bearings (11) at their end side about a transverse axis (10) at the rear region of the rear roof part (5) and can be supported downwardly by at least one stop (12), wherein the guide rail members (8) extend under the rear roof part (5) approximately over the length of the rear roof part, that the forward slide members (9) are connected to the front roof part (4), and that the rear roof part (5) can be lifted in its front region at the start of a stowing procedure, wherein the rearward guide rail members (8) are pivotable relative to the rear roof part (5) and downwardly supportable approximately according to their starting position, so that the front roof part (4) can be displaced under the rear roof part (5) along the sliding guideways (7) through the gap formed thereby between the rear roof part (5) and the front roof part (4).

6. Convertible vehicle according to claim 5, **characterised in that** the sliding guideways (7) are constructed as telescopic rail guides, preferably roller bearing telescopic rail guides and each rearward guide rail member (8) is a rearward telescopic rail member and the forward slide member (9) is an associated forward telescopic rail member.

7. Convertible vehicle according to claim 6, **characterised in that** the telescopic rail members (8) are bent, seen in side view, into the form of a circular arc segment.

8. Convertible vehicle according to one of the claims 1 to 7, **characterised in that** sealing profiles are arranged at all contact surfaces of the front roof part (4) and of the rear roof part (5) and/or at adjoining contact members.

9. Convertible vehicle according to one of the claims 1 to 8, **characterised in that** a helix cable drive is used for the displacement of the front roof part (4) under the rear roof part (5) and/or for the displacement of the roof part package (19) into the stowing position (20).

10. Convertible vehicle according to one of the claims 1 to 9, **characterised in that**, for automatic actuation of the arrangement, a control device (17) and at least one drive motor (18) are used, wherein for opening the hardtop (3), in a first control step the rear flap (13) is opened, in a second control step, the rear roof part (5) is moved somewhat rearwardly and is thereby tilted somewhat upwardly at the front, in a third control step the front roof part (4) is displaced under the rear roof part (5), forming the roof part package (19), in a fourth control step the roof part package (19) is displaced into its stowing position (20) and in a fifth control step the rear flap (13) is closed, and wherein, for closing the hardtop (3), the procedure can be carried out with the control steps reversed.

## Revendications

1. Véhicule cabriolet équipé d'un toit amovible dans le coffre,
dans lequel le toit amovible se compose d'au moins une partie de toit avant et d'une partie de toit arrière se raccordant au coffre,
la partie de toit avant peut être insérée sous la partie de toit arrière en un ensemble de parties de toit en longeant des premiers guidages latéraux reliés à la partie de toit arrière,
la partie de toit arrière avec la partie de toit avant insérée en dessous peut être déplacée comme ensemble de parties de toit dans des deuxièmes guidages latéraux disposés dans le coffre en longeant ces derniers, lorsque le hayon est ouvert,
**caractérisé en ce**
**que** les deuxièmes guidages disposés respectivement de manière latérale dans le coffre (2) se composent de rails de guidage en forme de S (21) parallèles, se faisant face,
**que** respectivement deux éléments de guidage (22) espacés qui sont guidés respectivement au niveau du rail de guidage en forme de S (21) associé, sont reliés à la partie de toit arrière (5) au niveau de ses zones arrière latéralement inférieures et
**que** les rails de guidage en forme de S (21) sont agencés de sorte que l'ensemble de parties de toit (19) est escamotable dans une zone de coffre directement sous le hayon (13) fermé si bien qu'une zone de coffre sous-jacente peut être utilisée entre le fond du coffre (26) et l'ensemble de parties de toit (19) escamoté.

2. Véhicule cabriolet selon la revendication 1, **caractérisé en ce**
**que** les rails de guidage en forme de S (21) commencent respectivement par un premier arc en forme de S (23) plat dirigé en bas vers l'arrière au niveau de la zone de coffre avant supérieure de sorte qu'un bref mouvement de recul de la partie de toit arrière (5) incline celle-ci vers le haut par guidage forcé par le biais des éléments de guidage (22) respectivement espacés dans la zone de toit avant (4),
**que** les rails de guidage en forme de S (21) se poursuivant vers l'arrière présentent respectivement une zone de guidage droit (24) à peu près rectiligne, dirigée en bas vers l'arrière, guidée jusqu'à mi-hauteur environ du coffre, et
**que** les rails de guidage en forme de S (21) présentent dans la zone d'extrémité arrière respectivement un deuxième arc en forme de S (25) se terminant en haut vers l'arrière de manière que l'ensemble de parties de toit (19) peut être basculé vers le bas dans la zone avant et peut être basculé dans l'ensemble dans une position escamotée (20) à peu près horizontale.

3. Véhicule cabriolet selon la revendication 1 ou 2, **caractérisé en ce que** les rails de guidage en forme de S (21) sont réalisés sous forme de profils en U et les éléments de guidage (22) côté toit sont réalisés sous forme de rouleaux de guidage s'y engrenant.

4. Véhicule cabriolet selon l'une quelconque des revendications 1 à 3, **caractérisé en ce**
**que** le hayon (13) entoure latéralement la zone arrière de la partie de toit arrière (5) avec des pièces latérales de hayon (14) dirigées vers l'avant, et
**que** respectivement des paliers pivotants de hayon (15) destinés au pivotement du hayon (13) sont disposés dans la zone d'extrémité avant des pièces latérales de hayon (14), de sorte que lorsque le hayon (13) est ouvert, il y a une grande zone de passage (16) entre les pièces latérales de hayon (14) pour permettre le passage de l'ensemble de parties de toit (19) escamoté.

5. Véhicule cabriolet selon l'une quelconque des revendications 1 à 4, **caractérisé en ce**
**que** les premiers guidages latéraux sont des guidages de glissement (7) parallèles formés respectivement d'une pièce de rail de guidage arrière (8) et d'une pièce coulissante (9) associée avant,
**que** les pièces de rails de guidage arrière (8) sont logées au niveau de l'extrémité de manière pivotante autour d'un axe transversal (10) au niveau de la zone arrière de la partie de toit arrière (5) sur des paliers pivotants de rails de guidage (11) et peuvent être soutenues vers le bas par au moins une butée (12), dans lequel les pièces de rails de guidage (8) s'étendent sous la partie de toit arrière (5) à peu près sur la longueur de la partie toit arrière,
**que** les pièces coulissantes avant (9) sont reliées à la partie de toit avant (4), et
**que** la partie de toit arrière (5) peut être soulevée dans la zone avant au début d'un processus d'escamotage, dans lequel les pièces de rails de guidage arrière (8) peuvent être pivotées par rapport à la partie de toit arrière (5) et peuvent être soutenues vers le bas en fonction de leur position de départ de sorte que la partie de toit avant (4) peut être déplacée sous la partie de toit arrière (5) en longeant les guidages de glissement (7) par la fente ainsi formée entre la partie de toit arrière (5) et la partie de toit avant (4).

6. Véhicule cabriolet selon la revendication 5, **caractérisé en ce que** les guidages de glissement (7) sont réalisés sous forme de guidages de rails télescopiques, de préférence de guidages de rails télescopiques à palier à rouleaux et respectivement la pièce de rail de guidage arrière (8) est une partie de rail télescopique arrière et la pièce coulissante avant (9) est une partie de rail télescopique avant associée.

7. Véhicule cabriolet selon la revendication 6, **caractérisé en ce que** les parties de rails télescopiques (8) sont incurvées dans une vue latérale sous forme de section en arc de cercle.

8. Véhicule cabriolet selon l'une quelconque des revendications 1 à 7, **caractérisé en ce que** des profils d'étanchéité sont disposés au niveau de toutes les surfaces d'appui de la partie de toit avant (4) et de la partie de toit arrière (5) et/ou au niveau des pièces d'appui adjacentes.

9. Véhicule cabriolet selon l'une quelconque des revendications 1 à 8, **caractérisé en ce que** pour le déplacement de la partie de toit avant (4) sous la partie de toit arrière (5) et/ou le déplacement de l'ensemble de parties de toit (19) dans la position escamotée (20), un entraînement à câble spiralé est utilisé.

10. Véhicule cabriolet selon l'une quelconque des revendications 1 à 9, **caractérisé en ce que** pour l'actionnement automatique de la disposition, un dispositif de commande (17) et au moins un moteur d'entraînement (18) sont utilisés, dans lequel pour ouvrir le toit amovible (3), le hayon (13) est ouvert dans une première étape de commande, dans une deuxième étape de commande, la partie de toit arrière (5) est déplacée un peu en arrière et est ainsi quelque peu relevable à l'avant, dans une troisième étape de commande, la partie de toit avant (4) est déplacée sous la partie de toit arrière (5) en formant l'ensemble de parties de toit (19), dans une quatrième étape de commande, l'ensemble de parties de toit (19) est déplacé dans sa position escamotée (20) et dans une cinquième étape de commande, le hayon (13) est fermé, et dans lequel pour fermer le toit amovible (3), le processus peut être exécuté dans le sens contraire des étapes de commande.
